# EUROPEAN PATENT SPECIFICATION

(11) **EP 3 175 697 B1**
(45) Date of publication and mention of the grant of the patent: **17.07.2019**
(21) Application number: 16205388.8
(22) Date of filing: 06.12.2013
(51) Int. Cl.: A01D 34/80, A01D 69/08, A01D 43/077

(54) **GRASS CUTTER**
RASENSCHNEIDER
TONDEUSE À GAZON

(30) Priority: 06.12.2012 JP 2012267676
(43) Date of publication of application: 07.06.2017
(62) Divisional of application: 13195981.9
(73) Proprietor: ISEKI & CO., LTD., Matsuyama-shi Ehime-ken (JP)
(72) Inventor: YOSHIKI, Shinya, Ehime-ken (JP); OKAMOTO, Suguru, Ehime-ken (JP); GOTO, Renshi, Ehime-ken (JP)
(74) Representative: Nordmeyer, Philipp Werner

(56) References cited:
- JP-A- 2006 304 660
- JP-A- 2008 029 286
- JP-A- 2008 212 008

## Description

### BACKGROUND

### 1. Field of the Invention

The present invention relates to a grass cutter.

As a grass cutter for mowing grass or lawn, there is one that is self-propelled to mow the grass or the lawn. It has been known such a grass cutter including a mower deck housing rotating blades, a grass collection vessel collecting the grass mowed by the mower deck, and a blower pneumatically conveying the grass from the mower deck to the grass collection vessel (e.g., see JP-A-2008-212008). Further, it has been known a grass cutter capable of shifting rotation of the blower to a high speed or a low speed with a hydraulic clutch (e.g., see JP-A-2008-29286).

However, the grass cutter disclosed in JP-A-2008-29286 has a drawback in that a blower PTO (power takeoff) transmission shaft is rotated by its inertia when the hydraulic clutch is in a neutral state. For this reason, maintenance of the blower connected to the blower PTO transmission shaft could not be performed until the rotation of the blower PTO transmission shaft stops.

An object of the present invention is to provide an improved grass cutter. The grass cutter according to the invention is defined by the features of claim 1. Preferable embodiments are described in the following description.

The grass cutter may further include a brake mechanism (B) configured to abut against a brake member (53) installed at a non-rotation unit (51) to brake the blower PTO transmission shaft (61) when the blower PTO hydraulic clutch (62) is in the neutral state.

The blower PTO hydraulic clutch (62) may include a clutch cylinder (65), a low-speed-side clutch (66), and a high-speed-side clutch (67); and the brake mechanism (B) may brake the clutch cylinder (65) rotating integrally with the blower PTO transmission shaft (61) by holding the brake member (53).

The intermediate shaft (80) includes a low-speed-side intermediate gear (82) of the drive force low-speed transmitting passage (L) and a high-speed-side intermediate gear (83) of the drive force high-speed transmitting passage (H).

If the grass cutter includes the brake mechanism which abuts against the brake member provided at a non-rotation unit when the blower PTO hydraulic clutch is in the neutral state, a braking force can be transmitted to the blower PTO transmission shaft. Accordingly, the grass cutter has an effect of stopping the blower PTO transmission shaft at the time of non-connection of the blower PTO hydraulic clutch (i.e. the neutral state).

Further, the brake mechanism B is preferably configured to brake the clutch cylinder 65 which is rotated integrally with the blower PTO transmission shaft 61, with the brake member 53 being put between the transmission shaft and the clutch cylinder.

Furthermore, the invention can simplify the shift transmission mechanism capable of transmitting the drive force generated from the drive source to the mower deck and the blower.

In addition, the invention can prevent intrusion of grass or dust since the blower PTO hydraulic clutch and the mower PTO hydraulic clutch are housed in the common clutch case.

### BRIEF DESCRIPTION OF THE DRAWINGS

The present invention will become more fully understood from the detailed description given hereinbelow and the accompanying drawing which is given by way of illustration only, and thus is not limitative of the present invention and wherein:
Fig. 1 is a side view illustrating an example of a schematic configuration of a grass cutter according to an embodiment.
Fig. 2 is a cross-sectional view illustrating an example of a schematic configuration of a shift transmission mechanism according to an embodiment.
Fig. 3 is a cross-sectional view illustrating an example of a schematic configuration of a blower PTO of the shift transmission mechanism in Fig. 2.
Fig. 4 is a block diagram illustrating an example of a configuration of a control unit for the grass cutter according to an embodiment.
Fig. 5 is a schematic flowchart illustrating one example of operation of a blower for the grass cutter according to the embodiment.
Fig. 6 is a schematic flowchart illustrating one example of mode selection of the grass cutter according to the embodiment.
Fig. 7 is a schematic flowchart illustrating one example of detecting a grass collection vessel for the grass cutter according to the embodiment.

### DETAILED DESCRIPTION OF THE INVENTION

A mode (embodiment) for carrying out the present invention will now be described in detail hereinafter with reference to the accompanying drawings. It should be noted that the present invention is not limited by the contents described in the embodiment below, and the components in the explanation below include those which are easily thought of by persons skilled in the art, those which are substantially identical, and those in a scope of so-called equivalents. In addition, the configuration described below may be appropriately combined; also various, omissions, substitutions, and modifications are possible.

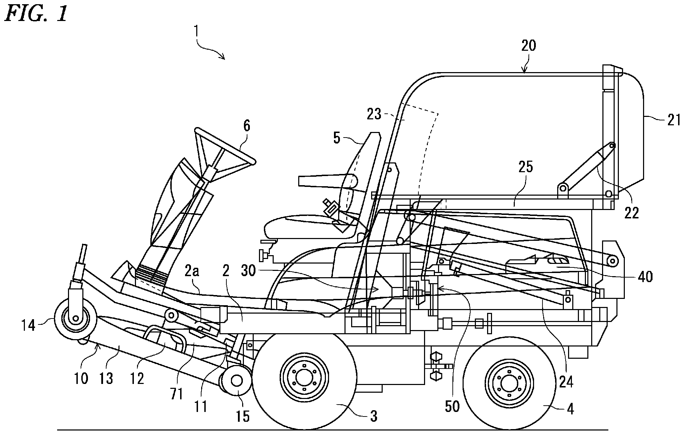

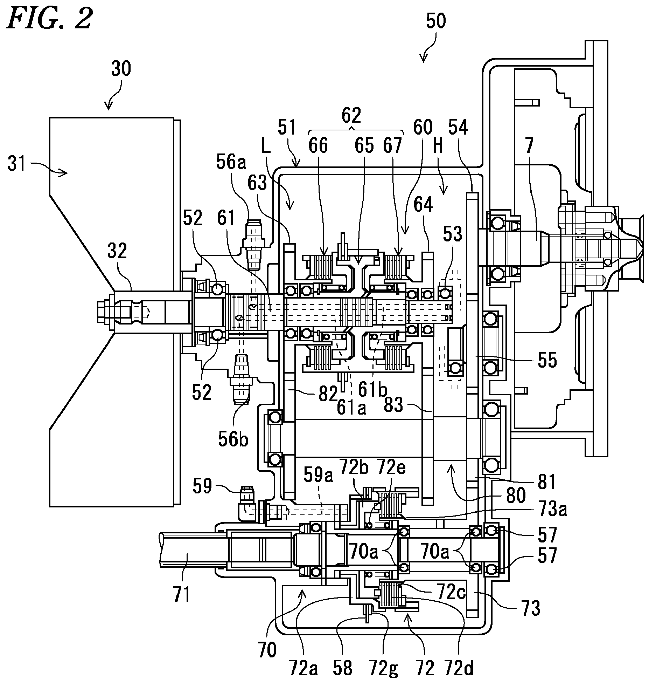

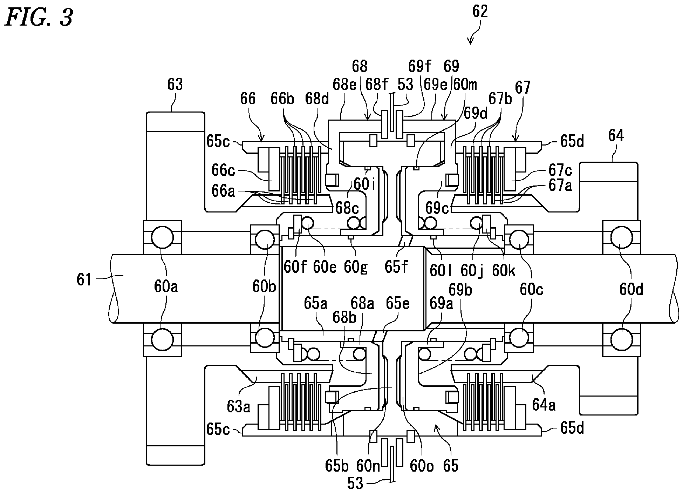

Fig. 1 is a side view illustrating an example of a schematic configuration of a grass cutter according to the embodiment. Fig. 2 is a cross-sectional view illustrating an example of a schematic configuration of a shift transmission mechanism according to the embodiment. Fig. 3 is a cross-sectional view illustrating an example of a schematic configuration of a blower PTO of the shift transmission mechanism in Fig. 2. A grass cutter 1 according to this embodiment illustrated in Fig. 1 includes a mower deck 10, a grass collection vessel 20, a blower 30, a drive source 40, and a shift transmission mechanism 50. In this embodiment, the grass cutter 1 is a work vehicle capable of mowing grass or lawn while a vehicle body 2 is running. The grass cutter 1 is a riding mower capable of mowing the grass or lawn while a worker (operator) rides the vehicle body 2 to operate it. Further, in this embodiment, a traveling direction of the grass cutter 1 is a direction along a front/rear direction of the vehicle body 2, and, for example, is a direction facing a steering handle 6 from an operator seat 5 at the time of straight forward traveling of the grass cutter 1. In addition, a vehicle width direction of the vehicle body 2 is a direction horizontally perpendicular to the traveling direction.

The vehicle body 2 includes a step floor 2a, front wheels 3, rear wheels 4, the operator seat 5, and the steering handle 6. In this embodiment, in the vehicle body 2, the front wheels 3 are disposed below the operator seat 5, and the rear wheels 4 are disposed at its rear. The front wheels 3 are disposed below the operator seat 5, and are arranged at left and right sides of the vehicle body 2 in the vehicle width direction. The rear wheels 4 are disposed at the rear of the vehicle body 2, and are arranged in the left and right sides of the vehicle body 2 in the vehicle width direction. The rear wheels 4 are steering wheels which are steered by the steering handle 6. The steering handle 6 is disposed at a front side of the step floor 2a. The steering handle 6 is disposed opposite to the operator seat 5 on which an operator sits. The steering handle 6 steers the left and right rear wheels 4 by rotating operation to change the traveling direction of the grass cutter 1.

The mower deck 10 is disposed below the step floor 2a. The mower deck 10 can be moved up and down by a mower lift cylinder 11 and a lift link (not illustrated). The mower deck 10 is moved up and down by operation of a lever connected to the link mechanism, operation of the link mechanism with an actuator, such as a hydraulic cylinder, or operation of the link mechanism having an electric motor. The mower deck 10 has rotating blades (not illustrated) disposed in a housing 13, and the rotating blades are operated with a blade shaft 12. The blade shaft 12 transmits the drive force from a mower PTO transmission shaft 71. The housing 13 is provided with gauge wheels 14 or grounding wheels 15. The rotating blades are disposed at the left and right sides of the vehicle body 2 in the vehicle width direction one by one, that is, a total of two rotating blades are disposed. A part of the drive force generated from the drive source 40 is transmitted to the mower PTO transmission shaft 71 and the blade shaft 12, so that the rotating blades are rotated. The rotating blades mow the grass or the lawn while rotating.

The grass collection vessel 20 is attached to a rear portion of the grass cutter 1 in the traveling direction. The grass collection vessel 20 has a cover 21, a collector dump cylinder 22, and a guide container 23. The grass collection vessel 20 is supported by a collector lift cylinder 24 and a collector lift link 25 such as to move up and down with respect to the vehicle body 2. The grass collection vessel 20 receives the grass or the lawn (hereinafter referred to as grass) mowed by the mower deck 10. Further, the grass collection vessel 20 is lifted in a direction far away from the vehicle body 2 by extending the collector lift cylinder 24, and is dumped by extending the collector dump cylinder 22 to open the cover 21 by the dumping and thus discharge the grass. The guide container 23 is a guide passage for conveying the grass from the mower deck 10 to the grass collection vessel 20. The guide container 23 is connected to the blower 30 and the grass collection container 20.

The blower 30 is disposed between the operator seat 5 and the drive source 40 at the downward rear side of the operator seat 5. As illustrated in Fig. 2, the blower 30 has a blower fan 31 housed in a blower fan case. The blower 30 pneumatically conveys the grass mowed by the mower deck 10. The blower 30 is provided with a suction opening formed in a front surface of the blower fan case, and a discharge opening formed in a top surface of the blower fan case. The suction opening of the blower fan case is connected to the mower deck 10 via an accordion-shaped shooter (not illustrated). The discharge opening of the blower fan case is connected to the guide container 23. Further, the blower fan 31 has a fan shaft 32 supported by a bearing 52a of a clutch case 51 which is attached to the rear side of the blower fan case. The fan shaft 32 is coupled to the blower PTO transmission shaft 61 of the shift transmission mechanism 50, and the drive force of the drive source 40 is transmitted to the fan shaft 32 from the blower PTO transmission shaft 61 to rotate the fan shaft.

The drive source 40 is an internal combustion engine referred to as a gasoline engine or a diesel engine. The drive force generated by the drive source can be taken off from a power take-off shaft 7 via a transmission mechanism such as an engine output shaft. In this instance, the drive source 40 may be a hybrid type which employs an internal combustion engine and an electric motor and uses any one or both according to a situation.

The shift transmission mechanism 50 takes off the drive force generated by the drive source 40 from the drive force take-off shaft 7, and transmits the drive force to the mower deck 10 and the blower 30. The shift transmission mechanism 50 includes a blower PTO 60, a mower PTO 70, an intermediate shaft 80, a drive force low-speed transmitting passage L, a drive force high-speed passage H, and a brake mechanism B. The respective parts 60, 70, 80, L, H and B is housed in the common clutch case 51 of the shift transmission mechanism 50.

The blower PTO 60 is a drive force take-off mechanism for taking the drive force generated by the drive source 40 to drive the blower 30. The blower PTO 60 has the blower PTO transmission shaft 61, the blower PTO hydraulic clutch 62, a low-speed gear 63, and a high-speed gear 64.

The blower PTO transmission shaft 61 is supported by a bearing 52b or the like installed in the clutch case 51, and is able to rotate with respect to the clutch case 51. The blower PTO transmission shaft 61 is coupled to the fan shaft 32 of the blower 30. The blower PTO transmission shaft 61 is provided with a first working oil passage 61a communicating with a first working oil supply port 56a installed at the clutch case 51 and connected to a working oil supplier (not illustrated), and a second working oil passage 61b communicating with a second working oil supply port 56b installed at the clutch case 51 and connected to the working oil supplier (not illustrated).

The blower PTO hydraulic clutch 62 has a clutch cylinder 65, a low-speed-side clutch 66, a high-speed-side clutch 67, a low-speed-side piston 68, and a high-speed-side piston 69. The blower PTO hydraulic clutch 62 shifts the rotation of the blower PTO transmission shaft 61 into a low speed or a high speed. That is, the blower PTO hydraulic clutch 62 switches the connection of the drive force low-speed transmitting passage L and the drive force high-speed passage H, and the blower PTO transmission shaft 61.

The clutch cylinder 65 is fitted onto the blower PTO transmission shaft 61, as illustrated in Figs. 2 and 3, and is rotated integrally with the blower PTO transmission shaft 61. The clutch cylinder 65 has a tube-like portion 65a, an annular portion 65b, a first peripheral wall portion 65c, and a second peripheral wall portion 65d.

The tube-like portion 65a is formed in a cylindrical shape corresponding to an outer peripheral surface of the blower PTO transmission shaft 61. The tube-like portion 65a is provided with a first communication passage 65e communicating with the first working oil passage 61a of the blower PTO transmission shaft 61, and a second communication passage 65f communicating with the second working oil passage 61b of the blower PTO transmission shaft 61. The annular portion 65b is formed in a disc shape. The first peripheral wall portion 65c extends from an edge of an outer peripheral side of the annular portion 65b toward the blower 30, and is formed in a cylindrical shape on a concentric circle of the blower PTO transmission shaft 61. The second peripheral wall portion 65d extends from the edge of the outer peripheral side of the annular portion 65b toward the drive force take-off shaft 7, and is formed in a cylindrical shape on a concentric circle of the blower PTO transmission shaft 61.

The low-speed-side clutch 66 has a first drive-side frictional plate 66a attached to the low-speed gear 63, and a first driven-side frictional plate 66b attached to the first peripheral wall portion 65c of the clutch cylinder 65. The low-speed-side clutch 66 engages the first drive-side frictional plate 66a and the first driven-side frictional plate 66b by friction, thereby interlocking the low-speed gear 63 and the clutch cylinder 65.

The high-speed-side clutch 67 has a second drive-side frictional plate 67a attached to the high-speed gear 64, and a second driven-side frictional plate 67b attached to the second peripheral wall portion 65d of the clutch cylinder 65. The high-speed-side clutch 67 engages the second drive-side frictional plate 67a and the second driven-side frictional plate 67b by friction, thereby interlocking the high-speed gear 64 and the clutch cylinder 65.

The low-speed-side piston 68 is fitted onto the tube-like portion 65a of the clutch cylinder 65, and thus is relatively movable in an axial direction with respect to the clutch cylinder 65. The low-speed-side piston 68 can press the first drive-side frictional plate 66a and the first driven-side frictional plate 66b of the low-speed-side clutch 66. The low-speed-side piston 68 is biased toward the drive force take-off shaft 7 by a first biasing unit 60e such as a compression coil spring or the like. The low-speed-side piston 68 is mounted in an annular groove formed by the tube-like portion 65a, the annular portion 65b and the first peripheral wall portion 65c of the clutch cylinder 65, and a first hydraulic chamber 60n communicating with the first communicating passage 65e is formed between the low-speed-side piston 68 and the clutch cylinder 65. The first hydraulic chamber 60n is sealed by seal members 60g and 60i in a liquid-tight manner.

The low-speed-side piston 68 has a sliding base 68a, a column portion 68b, a pressing portion 68c, an extension portion 68d, an opposite arm 68e, and a brake pad 68f. The sliding base 68a is formed in a cylindrical shape corresponding to the tube-like portion 65a of the clutch cylinder 65, and is fitted onto the tube-like portion 65a in a slidable manner. The column portion 68b extends from an edge (facing the drive force take-off shaft 7) of the sliding base 68a so that it is spaced away from the blower PTO transmission shaft 61 in a radial direction of the blower PTO transmission shaft 61. The pressing portion 68c extends from an edge of the column portion 68b toward the blower 30. The extension portion 68d extends from the edge (facing the blower 30) of the pressing portion 68c so that it is spaced away from the blower PTO transmission shaft 61 in the radial direction of the blower PTO transmission shaft 61. The opposite arm 68e extends from an edge of the extension portion 68d toward the drive force take-off shaft 7. The brake pad 68f is installed at an edge (facing the drive force take-off shaft 7) of the opposite arm 68e. The brake pad 68f is detachably installed to the opposite arm 68e. The brake pad 68f employs a resin-molded material or a sintered material, for example.

The high-speed-side piston 69 is fitted onto the tube-shaped portion 65a of the clutch cylinder 65, and is relatively movable in the axial direction with respect to the clutch cylinder 65. The high-speed-side piston 69 can press the second drive-side frictional plate 67a and the second driven-side frictional plate 67b of the high-speed-side clutch 67. The high-speed-side piston 69 is biased toward the blower 30 by a second biasing unit 60j such as a compression coil spring or the like. The high-speed-side piston 69 is mounted in an annular groove formed by the tube-like portion 65a, the annular portion 65b and the second peripheral wall portion 65d of the clutch cylinder 65, and a second hydraulic chamber 60o communicating with the second communicating passage 65f is formed between the high-speed-side piston 69 and the clutch cylinder 65. The second hydraulic chamber 60o is sealed by seal members 601 and 60m in a liquid-tight manner.

The high-speed-side piston 69 has a sliding base 69a, a column portion 69b, a pressing portion 69c, an extension portion 69d, an opposite arm 69e, and a brake pad 69f. The sliding base 69a is formed in a cylindrical shape corresponding to the tube-like portion 65a of the clutch cylinder 65, and is fitted onto the tube-like portion 65a in a slidable manner. The column portion 69b extends from an edge (facing the blower 30) of the sliding base 69a so that it is spaced away from the blower PTO transmission shaft 61 in the radial direction of the blower PTO transmission shaft 61. The pressing portion 69c extends from an edge of the column portion 69b toward the drive force take-off shaft 7. The extension portion 69d extends from the edge (facing the drive force take-off shaft 7) of the pressing portion 69c so that it is spaced away from the blower PTO transmission shaft 61 in the radial direction of the blower PTO transmission shaft 61. The opposite arm 69e extends from an edge of the extension portion 69d toward the blower 30. The brake pad 69f is installed at an edge (facing the blower 30) of the opposite arm 69e. The brake pad 69f is detachably installed to the opposite arm 69e. The brake pad 69f employs a resin-molded material or a sintered material, for example.

The low-speed gear 63 is supported on the outer circumference of the blower PTO transmission shaft 61 via bearings 60a and 60b, and is rotatable in a circumferential direction of the blower PTO transmission shaft 61. The low-speed gear 63 is mounted to the side of the blower in the axial direction of the blower PTO transmission shaft 61. The low-speed gear 63 extends toward the drive force take-off shaft 7, and has a drive-side frictional plate attaching portion 63a formed with engaging grooves (spline), to which the first drive-side frictional plate 66a is attached. The high-speed gear 64 is supported on the outer circumference of the blower PTO transmission shaft 61 via bearings 60c and 60d, and is rotatable in the circumferential direction of the blower PTO transmission shaft 61. The high-speed gear 64 is mounted to the side of the blower in the axial direction of the blower PTO transmission shaft 61. The high-speed gear 64 extends toward the blower 30, and has a drive-side frictional plate attaching portion 64a formed with engaging grooves (spline), to which the second drive-side frictional plate 67a is attached. A gear ratio of the low-speed gear 63 and the high-speed gear 6 is about 1/0.9, for example.

The mower PTO 70 is a drive force take-off mechanism taking off the drive force generated from the drive source 40 to operate the mower deck 10. The mower PTO 70 has the mower PTO transmission shaft 71, and the mower PTO hydraulic clutch 72, and a mower drive force transmitting gear 73.

The mower PTO transmission shaft 71 is supported by a bearing 57 or the like installed at the clutch case 51, and thus is rotatable with respect to the clutch case 51. The mower PTO transmission shaft 71 is connected to the blade shaft 12 of the mower deck 10.

The mower PTO hydraulic clutch 72 has a clutch cylinder 72a, a piston 72b, a third drive-side frictional plate 72c, and a third driven-side frictional plate 72d. The mower PTO hydraulic clutch 72 engages the third drive-side frictional plate 72c and the third driven-side frictional plate 72d by friction, thereby interlocking the mower drive force transmitting gear 73 and the clutch cylinder 72a. The clutch cylinder 72a has an annular concave groove shape corresponding to the outer circumference of the mower PTO transmission shaft 71. A groove portion of the concave groove shape of the clutch cylinder 72a is communicated with a third working oil passage 59a communicating with a working oil supply port 59 which is connected to a working oil supply source (not illustrated). The piston 72b is mounted into the groove portion of the clutch cylinder 72a, and is relatively movable with respect to the clutch cylinder 72a. The piston 72b is biased toward the blower 30 by a third biasing unit 72e such as a compression coil spring or the like. If the third working oil is supplied between the clutch cylinder 72a and the piston 72b, the piston 72b is moved toward the drive force take-off shaft 7 to press the third drive-side frictional plate 72c and the third driven-side frictional plate 72d. Further, a brake pad 72g is detachably installed to the piston 72b, and, at the time of neutral shift of the mower PTO hydraulic clutch 72, the brake pad is biased by the third biasing unit 72e to be pressed against the brake rotor 58.

The mower drive force transmitting gear 73 is supported by the outer circumference of the mower PTO transmission shaft 71 via a bearing 70a, and thus is rotatable in the circumferential direction of the mower PTO transmission shaft 71. The mower drive force transmitting gear 73 extends toward the blower 30, and has a drive-side frictional plate attaching portion 73a formed with engaging grooves (spline), to which the third drive-side frictional plate 72c is attached.

The intermediate shaft 80 is disposed between the blower PTO transmission shaft 61 and the mower PTO transmission shaft 71. The intermediate shaft 80 has a drive force transmitting gear 81, a low-speed-side intermediate gear 82, and a high-speed-side intermediate gear 83. The drive force transmitting gear 81 transmits the drive force from the drive source 40, the drive force being transmitted via a first intermediate drive force transmitting gear 54 connected to the drive force take-off shaft 7, and a second intermediate drive force transmitting gear 55 interlocking with the first intermediate drive force transmitting gear 54. The drive force transmitting gear 81 is meshed with the mower drive force transmitting gear 73 to transmit the drive force from the drive source 40 to the mower drive force transmitting gear 73. The low-speed-side intermediate gear 82 is meshed with the low-speed gear 63 to transmit the drive force from the drive source 40 to the low-speed gear 63. The high-speed-side intermediate gear 83 is meshed with the high-speed gear 64 to transmit the drive force from the drive source 40 to the high-speed gear 64. A gear ratio of the low-speed-side intermediate gear 82 and the high-speed-side intermediate gear 83 is about 0.9/1, for example. Accordingly, when the blower PTO hydraulic clutch 62 and the blower PTO transmission shaft 61 are on, the drive power from the drive source 40 can be transmitted to each of the blower PTO transmission shaft 61 and the mower PTO transmission shaft 71 via the intermediate shaft 80. Further, when any one of both clutches 62 and 72 is on, only one of the drive force transmission shafts 61 and 71 can be driven.

Brake rotors 53 and 58 pressed against the respective brake pads 68f, 69f and 72g of the respective pistons 68, 69 and 72b are detachably installed to the clutch case 51 which is a non-rotation unit with respect to the blower PTO transmission shaft 61 and the mower PTO transmission shaft 71. The brake rotors 53 and 58 are brake members which are pressed against the respective brake pads 68f, 69f and 72g to generate a braking force. The brake rotors 53 and 58 are made of iron or aluminum, for example.

The drive force low-speed transmitting passage L is a passage through which the drive force from the drive source 40 is transmitted to the blower PTO transmission shaft 61 at low speed, and includes the drive force take-off shaft 7, the first intermediate drive force transmitting gear 54, the second intermediate drive force transmitting gear 55, the drive force transmitting gear 81, the low-speed-side intermediate gear 82, the low-speed gear 63, the low-speed-side clutch 66, and the clutch cylinder 65. The drive force high-speed transmitting passage H is a passage through which the drive force from the drive source 40 is transmitted to the blower PTO transmission shaft 61 at high speed, and includes the drive force take-off shaft 7, the first intermediate drive force transmitting gear 54, the second intermediate drive force transmitting gear 55, the drive force transmitting gear 81, the high-speed-side intermediate gear 83, the high-speed gear 64, the high-speed-side clutch 67, and the clutch cylinder 65. The brake mechanism B includes the first biasing unit 60e, the low-speed-side piston 68, the second biasing unit 60j, the high-speed-side piston 69, and the brake rotor 53.

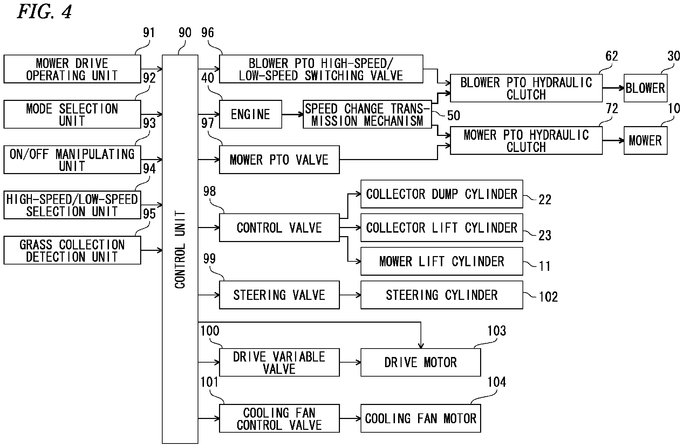

Referring to Fig. 4, the configuration of a control unit for the grass cutter 1 according to this embodiment will now be described. Fig. 4 is a block diagram illustrating an example of the configuration of the control unit for the grass cutter according to the embodiment. As illustrated in Fig. 4, the grass cutter 1 includes a control unit 90, a mower drive operating unit 91, a mode selection unit 92, an on/off manipulating unit 93, a high-speed/low-speed selection unit 94, a grass collection vessel detection unit 95, a blower PTO high-speed/low-speed switching valve 96, a mower PTO valve 97, a control valve 98, a steering valve 99, a drive variable pump 100, and a cooling fan control valve 101.

The control unit 90 consists of a processing section having a CPU (Central Processing Unit) or the like, a memory section such as RAM (Random Access Memory) or the like, and an input/output section. In the control unit 90, the processing section, the memory section, and the input/output section are connected to each other to exchange a signal mutually. In the control unit 90, a computer program for controlling the grass cutter 1 is stored in the memory section. The control unit 90 is electrically connected with the respective units 91 to 95 and the respective valves 96 to 99 and 101. Further, the control unit 90 is electrically connected with a drive source 40 (engine) of the mower deck 10, and a drive motor 103 of the grass cutter 1. In addition, although not illustrated, the control unit 90 is electrically connected with a battery for in-vehicle electric devices to supply an AC current to each electric device/part provided in the grass cutter 1, a power switch for switching ON and OFF of the power of the grass cutter 1, an operation pedal for moving the grass cutter 1 forward and rearward, an accelerator sensor for detecting an operation state of the operation pedal, a grass collection sensor for detecting a grass collection amount received in the grass collection vessel 20, a vehicle speed sensor for detecting a vehicle speed of the grass cutter 1, a display device for displaying various information on an LCD (Liquid Crystal Display) to notify an operator of it, or the like. For example, based on the detected result of the accelerator or the like, the processing section reads and operations the memory stored with the computer program, and then the unit control unit 90 controls the actuator, such as the drive motor 103, according to the result of the operations, thereby performing the drive control of the grass cutter 1. In this instance, the processing section stores appropriately numerical values during the operations in the memory section, and extracts appropriately the stored numerical values therefrom to execute the operations.

The mower drive operating unit 91 is configured to turn on/off the drive of the mower deck 10. The mower drive operating unit 91 switches ON/OFF of the mower PTO hydraulic clutch 72 in the shift transmission mechanism 50. Accordingly, the mower drive operating unit 91 switches the transfer and interruption of the drive force generated from the drive source 40. The mower drive operating unit 91 employs a member which can be operated by the operator, for example, a lever, a switch, or a mower clutch which is installed around the operator seat 5 or the steering handle 6.

The mode selection unit 92 is configured to select a grass collection mode and a work mode. According to the mode selection unit 92, in a case where the blower 30 is driven to pneumatically convey the grass mowed by the mower deck 10 to the grass collection vessel 20, the grass work mode is selected by the operator. However, in cases where the grass or the lawn is just mowed by the mower deck 10, but the blower 30 is not needed to operate, such as mulching work, and where other working machine instead of the mower deck 10 is connected to the mower PTO transmission shaft 71 for the working, the work mode is selected by the operator. That is, if the blower 30 is driven, the mode selection unit 92 selects the grass work mode, while if the blower 30 is not needed to drive, the mode selection unit 92 selects the work mode. The mode selection unit 92 employs a member which can be operated by the operator, for example, a lever, a switch, or a dial which is installed around the operator seat 5 or the steering handle 6.

The on/off manipulating unit 93 is configured to turn on/off the drive of the blower 30. The on/off manipulating unit 93 instructs the control unit 90 of whether the blower 30 is driven or not. The on/off manipulating unit 93 employs a member which can be operated by the operator, for example, a lever or a switch which is installed around the operator seat 5 or the steering handle 6.

The high-speed/low-speed selection unit 94 is configured to select the high-speed drive and the low-speed drive. The high-speed/low-speed selection unit 94 switches ON/OFF of the low-speed-side clutch 66, and switches ON/OFF of the high-speed-side clutch 67, in the blower PTO hydraulic clutch 62. Further, the high-speed/low-speed selection unit 94 turns off the high-speed-side clutch 67 when the low-speed-side clutch 67 is on, while turns on the high-speed-side clutch 67 when the low-speed-side clutch 67 is off. That is, high-speed/low-speed selection unit 94 alternatively performs ON/OFF of the low-speed-side clutch 66 and the high-speed-side clutch 67. The high-speed/low-speed selection unit 94 employs a member which can be operated by the operator, for example, a lever, a switch, or a dial which is installed around the operator seat 5 or the steering handle 6. Further, the high-speed/low-speed selection unit 94 can shift the blower PTO hydraulic clutch 62 to a neutral position, a low-speed position or a high-speed position.

The grass collection vessel detection unit 95 is a configured to detect loading of the grass collection vessel 20. The grass collection vessel detection unit 95 detects the grass collection vessel 20 when the grass collection vessel 20 is loaded at a given position on the vehicle body 2. The given position is a position capable of collecting and receiving the grass, witch is hydraulically conveyed from the mower deck 10 via the blower 30, in the grass collection vessel 20. The grass collection vessel detection unit 95 can employ a sensor or an electric switch capable of detecting the loading of the grass collection vessel, for example, a limit switch operating when the grass collection vessel 20 is loaded in the vehicle body 2. The grass collection vessel detection unit 95 outputs a detection signal detecting the loading of the grass collection container 20 to the control unit 90.

The blower PTO high-speed/low-speed switching valve 96 is a switching valve capable of switching the blower PTO hydraulic clutch 62 among a low-speed transmitting state in which the low-speed-side clutch 66 is on while the high-speed-side clutch 67 is off, a high-speed transmitting state in which both the low-speed-side clutch 66 and the high-speed-side clutch 67 are on, and a drive force interrupting state (neutral state) in which both the low-speed-side clutch 66 and the high-speed-side clutch 67 are off. The blower PTO high-speed/low-speed switching valve 96 is, for example, a directly driven solenoid valve, and it is preferable to perform a so-called ABR connection in a type of a spring sensor of both-side single acting solenoid when the solenoid is not excited. Accordingly, the blower PTO high-speed/low-speed switching valve 96 switches the passage of the work oil (flow direction of work oil) supplied to the first work oil passage 61a and the first communication passage 65e of the low-speed-side clutch 66 and the second work oil passage 61b and the second communication passage 65f of the high-speed-side clutch 67 from the work oil supplier (not illustrated) to switch the high-speed transmitting state and the low-speed transmitting state, and communicates (so-called ABR connection) the first work oil passage 61a and the first communication passage 65e, and the second work oil passage 61b and the second communication passage 65f to switch it to the drive force interrupting state. Further, when the power of the grass cutter 1 is off, the solenoid of the blower PTO high-speed/low-speed switching valve 96 is not excited to perform the so-called ABR connection, thereby turning off the blower PTO hydraulic clutch 62. The blower PTO high-speed/low-speed switching valve 96 is controlled by the control unit 90 according to the high-speed drive or the low-speed drive of the blower selected by the high-speed/low-speed selection unit 94.

The mower PTO valve 97 is a valve capable of switching ON/OFF of the mower PTO hydraulic clutch 72. The mower PTO valve 97 is, for example, a proportional solenoid valve to control a supply amount (pressure) of the work oil to be supplied to the mower PTO hydraulic clutch 72 from the work oil supplier (not illustrated). The mower PTO valve 97 is controlled by the control unit 90, and the supply amount (pressure) of the work oil is increased or decreased according to the increased or decreased current amount from the control unit 90. The control unit 90 relatively increases the supply amount of the work oil to turn on the mower PTO valve 97, while relatively decreases the supply amount of the work oil to turn off the mower PTO valve 97.

The control valve 98 has a collector dump valve for controlling the operation of the collector dump cylinder 22, a collector lifter valve for controlling the operation of the collector lift cylinder 24, and a mower lift valve for controlling the operation of the mower lift cylinder 11. Each valve of the control valve 98 is a spring return-type foot valve of the directly driven pedal, for example. The control valve 98 is operated by pressing operation of the operator sitting on the operator seat 5. Further, the control valve 98 detects the pressing operation of the operator to output the operation state to the control unit 90.

The steering valve 99 is a directional control valve capable of controlling the flow of the work oil which is supplied to the steering cylinder 102 from the work oil supplier (not illustrated) to drive the steering cylinder 102. Also, the steering valve 99 controls the flow of the work oil supplied to the steering pump (not illustrated). The steering valve 99 is controlled by the control unit 90.

The drive variable pump 100 is a variable displacement oil pump capable of driving the drive motor 103. Further, the drive variable pump 100 is equipped with a directional control valve for controlling the flow of the work oil supplied to the drive motor 103 to control forward and reverse drive of the front wheels 3 and the rear wheels 4. The drive variable pump 100 is controlled by the control unit 90.

The cooling fan control valve 101 is a directional control valve capable of controlling the flow of the work oil supplied to a cooling fan motor 104 to drive the cooling fan motor 104, and controls forward rotation, reverse rotation, and stop of the cooling fan motor 104. The cooling fan control valve 101 is controlled by the control unit 90.

With reference to the above-described configuration of the grass cutter 1 according to the embodiment, the fundamental operation thereof will be described hereinafter. In the case of driving the grass cutter 1, the operator manipulates the operation pedal (not illustrated) for forward/reverse drive to drive the front wheels 3 and the rear wheels 4, and thus the grass cutter drives at a wanted speed according to the pressing (manipulation amount) of the manipulation pedal. Further, as the rear wheels 4 are steered by rotating the steering handle 6, the grass cutter 1 travels in a wanted direction.

Specifically, the accelerator sensor detects the pressing (manipulation amount) of the manipulation pedal which is operated by the operator, and outputs the detected result to the control unit 90 as the accelerator information. The control unit 90 controls the drive variable pump 100 based on the input accelerator information and the vehicle speed of the grass cutter 1 detected by the vehicle sensor, so that torque and rotating speed generated from the drive motor 103 are set to torque and rotating speed according to the accelerator information. Therefore, the speed of the grass cutter 1 becomes the speed according to the accelerator information.

Further, in the case of mowing the grass or lawn while the grass cutter 1 is driving, the operator manipulates the mower drive operating unit 91 to turn on the drive of the mower deck 10, so that the drive force of the drive source 40 is transmitted to the mower deck 10 via the shift transmission mechanism 50 to drive the mower deck 10.

Specifically, the control unit 90 detects the manipulation information (on/off manipulation information) of the mower drive operating unit 91 manipulated by the operator. If the on manipulation information is detected, the control unit 90 controls the mower PTO valve 97 to supply the work oil to the third working oil passage 59a from the work oil supplier (not illustrated) and thus turn on the mower PTO hydraulic clutch 72. Accordingly, the drive force generated from the drive source 40 is transmitted to the mower deck 10 via an engine output shaft, the drive force take-off shaft 7, the first intermediate drive force transmitting gear 54, the second intermediate drive force transmitting gear 55, the drive force transmitting gear 81, the mower drive force transmitting gear 73, the clutch cylinder 72a, and the mower PTO transmission shaft 71. The mower deck 10 transmitted with the drive force mows the grass or the lawn by two left and right rotating blades rotated by the transmitted drive force.

Further, in the case of collecting the grass while the mower deck 10 is driven, the operator turns on the on/off manipulating unit 93 to transmit the drive force of the drive source 40 to the blower 30 via the shift transmission mechanism 50.

Specifically, the control unit 90 detects the manipulation information (on/off manipulation information) of the on/off manipulating unit 93 manipulated by the operator. If the on manipulation information is detected, the control unit 90 controls the blower PTO high-speed/low-speed switching valve 96 to supply the work oil to the first working oil passage 61a and the first communication passage 65e from the work oil supplier (not illustrated) and thus turn on the low-speed-side clutch 66 of the blower PTO hydraulic clutch 62. Accordingly, the drive force generated from the drive source 40 is transmitted to the blower 30 via the engine output shaft, the drive force take-off shaft 7, the first intermediate drive force transmitting gear 54, the second intermediate drive force transmitting gear 55, the drive force transmitting gear 81, the low-speed-side intermediate gear 82, the low-speed gear 63, the clutch cylinder 65, and the blower PTO transmission shaft 61. The blower 30 transmitted with the drive force pneumatically conveys the grass mowed by the mower deck 10 to the grass collection vessel 20 to collect the grass in the grass collection vessel 20.

Further, in the case of discharging the collected grass from the grass collection vessel 20, as the operator presses down the control valve 98, the collector dump cylinder 22 and the collector lift cylinder 24 are operated, and thus the cover 21 is opened in the state in which the grass collection vessel 20 is lifted up from the vehicle body 2, thereby discharging the grass from the grass collection vessel 20.

Specifically, the control unit 90 detects the manipulation information (press information) of the control valve 98 manipulated by the pressing operation of the operator. If the pressing information is detected, the control unit 90 controls the collector dump valve and the collector lift valve to supply the work oil to the collector dump cylinder 22 and the collector lift cylinder 24 from the work oil supplier (not illustrated). Accordingly, the collector dump cylinder 22 and the collector lift cylinder 24 are expanded to lift up the grass collection container 20 from the vehicle body 2, and the grass collector grass 20 is further lifted up with the collector dump cylinder 22 as a fulcrum to open the cover 21. The grass in the grass collection vessel 20 is discharged outwardly from the grass collection vessel 20 with the cover 21 being opened.

Further, in the case of turning off the power source of the grass cutter 1, as the operator turns off the power switch of the grass cutter 1, the supply of the work oil from the work oil supplier (not illustrated) is stopped, so that the respective vales 96. 97. 98. 99 and 101 and the respective clutches 62, 66, 67 and 72, and the drive motor 103 are stopped, and the mower deck 10 and the blower 30 are also stopped. In this instance, the mower deck 10 is stopped by the braking action of the mower PTO hydraulic clutch 72, and the blower 30 is stopped by the braking action of the blower PTO hydraulic clutch 62.

Specifically, even though the mower PTO hydraulic clutch 72 is on, if the operator turns off the power switch of the grass cutter 1, the supply of the work oil to the third work oil passage 59a from the work oil supplier (not illustrated), and the piston 72b pressing the third drive-side frictional plate 72c and the third driven-side frictional plate 72d are displaced toward the blower 30 by the third biasing unit 72e, and thus the brake pad 72g installed to the piston 72b is presses against the brake rotor 58 installed to the clutch case 51. Accordingly, the braking force is applied to the mower PTO transmission shaft 71 via the clutch cylinder 72a by the piston 72b pressed against the brake rotor 58, and the mower deck 10 is braked by the braking force. That is, if the mower PTO hydraulic clutch 72 is on and the power switch of the grass cutter 1 is off, the mower PTO hydraulic clutch 72 can apply the braking force to the mower PTO transmission shaft 71 to suppress the two rotating blades of the mower deck 10 from being continuously rotated, thereby stopping the mower deck 10. Further, similar to the case where the mower PTO hydraulic clutch 72 is off, the mower PTO hydraulic clutch 72 can apply the braking force to the mower PTO transmission shaft 71, thereby stopping the mower deck 10.

Further, even though the blower PTO hydraulic clutch 62 is on, when the operator turns off the power switch of the grass cutter 1, the supply of the work oil to the first work oil passage 61a and the first communication passage 65e from the work oil supplier (not illustrated) is stopped, when the low-speed-side clutch 66 is on. Therefore, the low-speed-side piston 68 pressing the first drive-side frictional plate 66a and the first driven-side frictional plate 66b is displaced toward the drive power take-off shaft 7 by the first biasing unit 60e, and the brake pad 68f installed to the low-speed-side piston 68 is presses against the brake rotor 53 installed to the clutch case 51. Further, in the case where the high-speed-side clutch 67 is on, the supply of the work oil to the second work oil passage 61b and the second communication passage 65f from the work oil supplier (not illustrated) is stopped, so that the high-speed-side piston 69 pressing the second drive-side frictional plate 67a and the second driven-side frictional plate 67b is displaced toward the blower 30 by the second biasing unit 60j, and the brake pad 69f installed to the high-speed-side piston 69 is presses against the brake rotor 53 installed to the clutch case 51. Therefore, since the brake rotor 53 is sandwiched between the brake pad 68f of the low-speed-side piston 68 and the brake pad 69f of the high-speed-side piston 69, the braking force is applied to the blower PTO transmission shaft 61 via the clutch cylinder 65, and thus the blower 30 is braked by the braking force. That is, when the blower PTO hydraulic clutch 62 is in neutral, the blower 30 is braked by the brake mechanism B. That is, if the blower PTO hydraulic clutch 62 is on and the power switch of the grass cutter 1 is off, since the blower PTO hydraulic clutch 62 can apply the braking force to the blower PTO transmission shaft 61, it is possible to suppress the blower fan 31 of the blower 30 from being rotated continuously by its inertia, thereby stopping the blower 30. Further. Similarly, at the time of the general neutral, the blower PTO hydraulic clutch 62 can apply the braking force to the blower PTO transmission shaft 61 to stop the blower 30. In addition, since the brake rotor 53 is sandwiched between the brake pads 68f and 69f of the two pistons 68 and 69, the blower PTO hydraulic clutch 62 can apply the strong braking force to the blower PTO transmission shaft 61.

In this instance, when the blower PTO hydraulic clutch 62 is on, only one of the low-speed-side clutch 66 and the high-speed-side clutch 67 is on. In this instance, however, for the other of the low-speed-side clutch 66 and the high-speed-side clutch 67 which is off, it is preferable that the brake pad and the brake rotor 53 are not in contact with each other, and the piston is displaced to the position where the drive-side frictional plate and the driven-side frictional plate are not pressed. Therefore, when blower PTO hydraulic clutch 62 is on, it is possible to smoothly rotate the blower PTO transmission shaft 61.

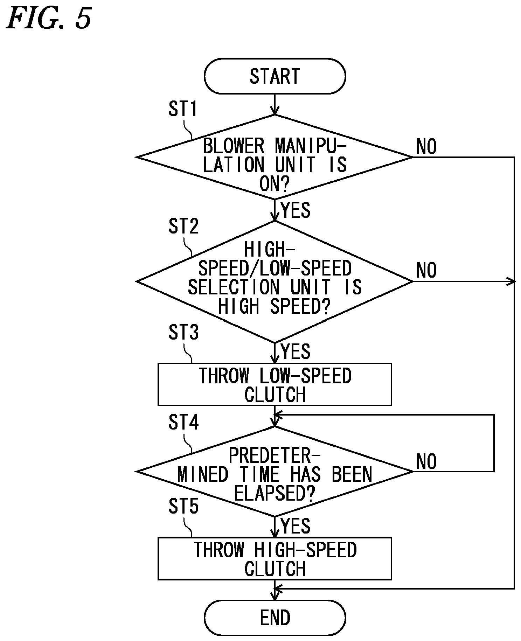

The operation of the blower 30 of the grass cutter 1 according to the embodiment will be described with reference to Fig. 5. Fig. 5 is a schematic flowchart illustrating one example of the operation of the blower for the grass cutter according to the embodiment. First, the control unit 90 of the grass cutter 1 determines whether the on/off manipulating unit 93 is on or not (step ST1). Herein, the control unit 90 detects the on/off manipulation of the lever or switch which is the on/off manipulating unit 93 to determine whether the on/off manipulating unit 93 is on or not.

Subsequently, if it is determined that the of/off manipulating unit 93 is on (Yes in step ST1), the control unit 90 determines whether the high-speed/low-speed selection unit 94 is the high speed or not (step ST2). Herein, the control unit 90 detects the switching manipulation by which the lever, the switch or the dial which is the high-speed/low-speed selection unit 94 is switched to the high speed or the low speed, thereby determining whether the high-speed/low-speed selection unit 94 is the high speed or not.

Then, if it is determined that the high-speed/low-speed selection unit 94 is the high speed (Yes in step ST2), the control unit 90 throws the low-speed-side clutch 66 of the blower PTO hydraulic clutch 62 (step ST3). Herein, the control unit 90 controls the blower PTO high-speed/low-speed switching valve 96 to supply the work oil to the first work oil passage 61a and the first communication passage 65e from the work oil supplier (not illustrated) and thus displace the low-speed-side piston 68 toward the drive power take-off shaft 7, so that the first drive-side frictional plate 66a and the first driven-side frictional plate 66b are engaged by friction to interlock the low-speed gear 63 with the clutch cylinder 65. Accordingly, the drive force generated from the drive source 40 is transmitted to the blower 30 via the engine output shaft, the drive force take-off shaft 7, the first intermediate drive force transmitting gear 54, the second intermediate drive force transmitting gear 55, the drive force transmitting gear 81, the lower-speed-side intermediate gear 82, the low-speed gear 63, the clutch cylinder 65, and blower PTO transmission shaft 61. That is, the drive force generated from the drive source 40 is transmitted to the blower 30 via the drive force low-speed transmitting passage L. The blower 30 transmitted with the drive force rotates the blower fan 31 at relatively low speed.

The control unit 90 determines whether a predetermined time has been elapsed or not (step ST4). Herein, the control unit 90 compares a set time previously stored in the memory section of the control unit 90 and the time (elapsed time) after the low-speed-side clutch 66 is thrown, and determines that the predetermined time has been elapsed, if the elapsed time exceeds the elapsed time. Further, the predetermined time, that is, the set time, is a time until the number of rotations of the blower PTO transmission shaft 61 reaches the number of rotations not to apply a high load to the high-speed-side clutch 67 when the high-speed-side clutch 67 is thrown. The predetermined time is about a few seconds, for example.

Subsequently, if it is determined that the predetermined time has been elapsed (Yes in step ST4), the control unit 90 throws the high-speed-side clutch 67 of the blower PTO hydraulic clutch 62 (step ST5). Herein, the control unit 90 controls the blower PTO high-speed/low-speed switching valve 96 to stop the supply of the work oil to the first work oil passage 61a and the first communication passage 65e from the work oil supplier (not illustrated) and supply the work oil to the second work oil passage 61b and the second communication passage 65f from the work oil supplier, so that after the low-speed-side piston 68 is displaced toward the drive force take-off shaft 7, the high-speed-side piston 69 is displaced toward the blower 30, and the second drive-side frictional plate 67a and the second driven-side frictional plate 67b are engaged by friction to interlock the high-speed gear 64 with the clutch cylinder 65. Accordingly, the drive force generated from the drive source 40 is transmitted to the blower 30 via the engine output shaft, the drive force take-off shaft 7, the first intermediate drive force transmitting gear 54, the second intermediate drive force transmitting gear 55, the drive force transmitting gear 81, the high-speed-side intermediate gear 83, the high-speed gear 64, the clutch cylinder 65, and blower PTO transmission shaft 61. That is, the drive force generated from the drive source 40 is transmitted to the blower 30 via the drive force high-speed transmitting passage H. The blower 30 transmitted with the drive force rotates the blower fan 31 at relatively high speed.

In this instance, the state in which the blower fan 31 is rotated at the relatively low speed means that the blower fan 31 is rotated at the number of rotations capable of suppressing action sound of the blower 30. For example, it means that the blower fan 31 is rotated at the number of rotations capable of suppressing the action sound under the circumstance requiring for low noise, such as a built-up area. Further, the state in which the blower fan 31 is rotated at the relatively high speed means that the blower fan 31 is rotated at the number of rotations capable of pneumatically conveying the grass mowed by the mower deck 10 to the grass collection vessel 20. For example, it means that the blower fan 31 is rotated at the number of rotations to create an air capacity (flow rate) capable of conveying the grass to the grass collection vessel 20 without clogging the guide container 23 with the grass.

In a case where the grass cutter 1 according to this embodiment wants to drive the stopped blower 30 at high speed, when the on/off manipulating unit 93 is on and the high-speed/low-speed selection unit 94 are the high speed, the high-speed-side clutch 67 is turned on (switched from the low-speed-side clutch 66 to the high-speed-side clutch 67) if the predetermined time has been elapsed after the low-speed-side clutch 66 is turned on. Therefore, it is possible to rotate the blower at high speed after it is rotated at low speed. As a result, the load when the blower 30 starts to be driven can be decreased. Further, although the blower 30 is generally driven at high speed, since the blower 30 is driven at low speed when the blower start to be driven, the work oil is supplied to the first work oil passage 61a and the first communication passage 65e to operate the low-speed-side clutch 66. Therefore, since the work oil filtered by a filter of the work oil supplier (not illustrated) is frequently supplied to the first work oil passage 61a and the first communication passage 65e, it is possible to suppress dirt, such as dust, from being gathered in the first work oil passage 61a and the first communication passage 65e, thereby maintaining the normal operation of the low-speed-side clutch 66.

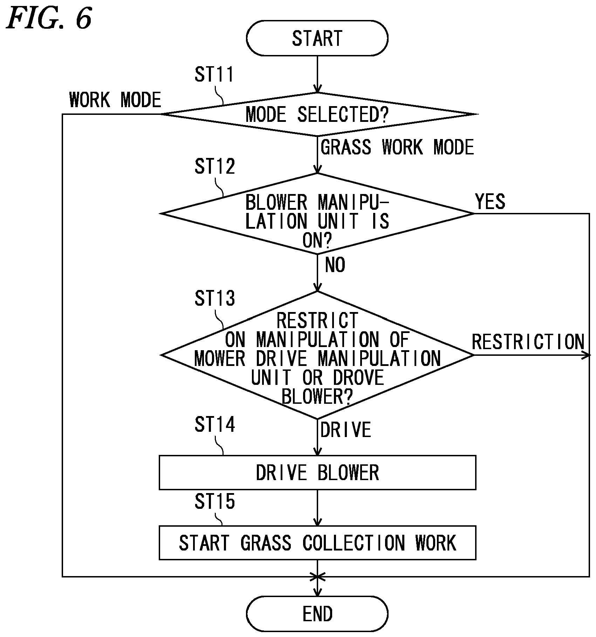

The mode selection of the grass mower 1 according to the embodiment will be described with reference to Fig. 6. Fig. 6 is a schematic flowchart illustrating one example of the mode selection of the grass cutter according to the embodiment. First, the control unit 90 of the grass cutter 1 determines whether the mode selection unit 92 is the grass collection work mode or the work mode (step ST11). Herein, the control unit 90 detects the switching operation of the lever, the switch or the dial, which is the mode selection unit 92, between the grass collection mode and the work mode to determine whether the mode selection unit 92 is the grass collection work mode or the work mode.

Subsequently, if it is determined that the mode selection unit 92 is the work mode (work mode in step ST11), since the on manipulation of the mower drive operating unit 91 is not restricted, the control unit 90 can perform the work to connect a PTO shaft of other operating machine with the mower PTO transmission shaft 71, or the mulching work just to mow the grass or the lawn with the mower deck 10. That is, it is possible to perform the work without using the blower 30.

In step ST11, if it is determined that the mode selection unit 92 is the grass collection work mode (grass collection work mode in step ST11), the control unit 90 determines whether the on/off manipulation unit 93 is on or not (step ST12). Herein, the control unit 90 determines whether the on/off manipulation unit 93 is on or not by detecting the on/off manipulation of the lever or the switch which is the on/off manipulation unit 93.

Next, if it is determined that the on/off manipulation unit 93 is on (Yes in step ST12), similar to step ST2 to step ST5, it is preferable that, when the high-speed/low-speed selection unit 94 is the high speed, the control unit 90 throws the low-speed-side clutch 66, and then throws the high-speed-side clutch 67 after the predetermined time has been elapsed. Accordingly, it is possible to perform the normal grass collection work.

In step ST12, if it is determined that the on/off manipulation unit 93 is off (No in step ST12), the control unit 90 determines to restrict the on manipulation of the mower drive operating unit 91 or drive the blower 30 (step ST13). Herein, restricting the on manipulation of the mower drive operating unit 91 or driving the blower 30 is preferably set by, for example, the operator in advance. In this instance, as the control unit selects the operation previously set by the operator, the control unit 90 determines to restrict the on manipulation of the mower drive operating unit 91 or drive the blower 30.

Subsequently, if it is determined to restrict the on manipulation of the mower drive operating unit 91 (restriction in step ST13), the control unit 90 does not drive the mower deck 10 even though the operator turns on the mower drive operating unit 91. Herein, the control unit 90 mechanically restricts the on manipulation of the lever or the switch which is the mower drive operating unit 91, or the mower clutch. In this instance, the control unit 90 preferably displays the state, in which the on/off manipulation unit 93 of the blower 30 is off, on the LCD or the like to notify the operator of it. As the method of restricting the on manipulation of the mower drive operating unit 91, for example, the control unit 90 may restrict the operation of the mower PTO valve so that the mower PTO hydraulic clutch 72 is not turned on.

In step ST13, if it is determined to drive the blower 30 (drive in step ST13), the control unit 90 drives the blower 30 (step ST14). That is, since the mode selection unit 92 is the grass collection work mode, the control unit 90 automatically drives the blower 30. Herein, similar to step ST2 to step ST5, it is preferable that, when the high-speed/low-speed selection unit 94 is the high speed, the control unit 90 throws the low-speed-side clutch 66, and then throws the high-speed-side clutch 67 after the predetermined time has been elapsed. Accordingly, it is possible to perform the normal grass collection work.

Next, the grass cutter 1 starts the grass collection work (step ST15). Herein, the grass cutter 1 collects the grass in the grass collection vessel 20 with the blower 30. Further, since the mower drive operating unit 91 is turned on by the operator, the grass cutter 1 drives the mower deck 10 to collect the grass while mowing the grass or lawn.

With the grass cutter 1 according to this embodiment, at the time of the grass collection work at which the mode selection unit 92 is the grass collection work mode, the control unit 90 determines to restrict the on manipulation of the mower drive operating unit 91 or drive the blower 30, if the on/off manipulation unit 93 is off. In the case where the on/off manipulation unit 93 is off, the control unit notifies the operator of it. In the case of driving the blower 30, the control unit automatically drives the blower 30. Therefore, even though the operator forgets turning on the on/off manipulation unit 93, it is possible to perform the grass collection work. Accordingly, it is possible to prevent the operator from forgetting turning on the blower 30 at the grass collection work.

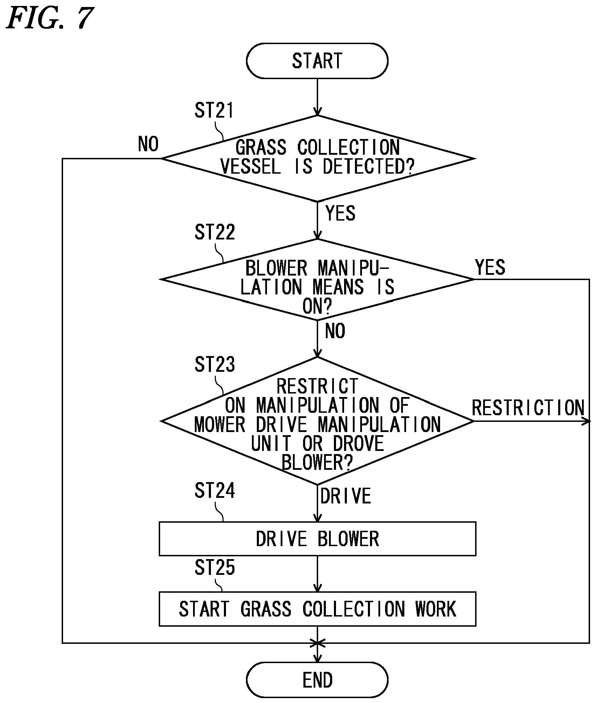

The grass collection work of the grass cutter 1 according to the embodiment will be described with reference to Fig. 7. Fig. 7 is a schematic flowchart illustrating one example of detecting the grass collection vessel for the grass cutter according to the embodiment. First, the control unit 90 of the grass cutter 1 determines whether the grass collection vessel 20 is detected or not (step ST21). Herein, the control unit 90 determines whether the grass collection vessel 20 is detected or not using the detection signal of the grass collection vessel detection unit 95 which detects the loading of the grass collection vessel 20.

If it is determined that the grass collection vessel 20 is not detected (No in step ST21), the control unit 90 preferably displays the state, in which the grass collection vessel 20 is not loaded at a desired position of the vehicle body 2, on the LCD or the like to notify the operator of it. Further, until the grass collection vessel 20 is not loaded at a desired position of the vehicle body 2 and then the grass collection container 20 is detected, it is preferable that the control unit 90 restricts the on manipulation of the mower drive operating unit 91, or restricts the on manipulation of the on/off manipulation unit 93. In this instance, even though the grass collection vessel 20 is not detected, the control unit 90 may perform the on manipulation of the mower drive operating unit 91 if the state in which the PTO shaft of other operating machine is connected with the mower PTO transmission shaft 71 is detected.

In step ST21, if it is determined that the grass collection vessel 20 is detected (Yes in step ST21), the control unit 90 determines whether the on/off manipulation unit 93 is on or not (step ST22). Herein, the control unit 90 determines whether the on/off manipulation unit 93 is on or not by detecting the on/off manipulation of the lever or the switch which is the on/off manipulation unit 93.

Next, if it is determined that the on/off manipulation unit 93 is on (Yes in step ST22), similar to step ST2 to step ST5, it is preferable that, when the high-speed/low-speed selection unit 94 is the high speed, the control unit 90 throws the low-speed-side clutch 66, and then throws the high-speed-side clutch 67 after the predetermined time has been elapsed. Accordingly, it is possible to perform the normal grass collection work.

In step ST22, if it is determined that the on/off manipulation unit 93 is off (No in step ST22), the control unit 90 determines to restrict the on manipulation of the mower drive operating unit 91 or drive the blower 30 (step ST23). Herein, restricting the on manipulation of the mower drive operating unit 91 or driving the blower 30 is preferably set by, for example, the operator in advance. In this instance, as the control unit selects the operation previously set by the operator, the control unit 90 determines to restrict the on manipulation of the mower drive operating unit 91 or drive the blower 30.

Subsequently, if it is determined to restrict the on manipulation of the mower drive operating unit 91 (restriction in step ST13), the control unit 90 does not drive the mower deck 10 even though the operator turns on the mower drive operating unit 91. Herein, the control unit 90 mechanically restricts the on manipulation of the lever or the switch which is the mower drive operating unit 91, or the mower clutch. In this instance, the control unit 90 preferably displays the state, in which the on/off manipulation unit 93 of the blower 30 is off, on the LCD or the like to notify the operator of it. As the method of restricting the on manipulation of the mower drive operating unit 91, for example, the control unit 90 may restrict the operation of the mower PTO valve so that the mower PTO hydraulic clutch 72 is not turned on.

In step ST23, if it is determined to drive the blower 30 (drive in step ST23), the control unit 90 drives the blower 30 (step ST24). That is, since the mode selection unit 92 is the grass collection work mode, the control unit 90 automatically drives the blower 30. Herein, similar to step ST2 to step ST5, it is preferable that, when the high-speed/low-speed selection unit 94 is the high speed, the control unit 90 throws the low-speed-side clutch 66, and then throws the high-speed-side clutch 67 after the predetermined time has been elapsed.

Next, the grass cutter 1 starts the grass collection work (step ST25). Herein, the grass cutter 1 collects the grass in the grass collection vessel 20 with the blower 30. Further, since the mower drive operating unit 91 is turned on by the operator, the grass cutter 1 drives the mower deck 10 to collect the grass while mowing the grass or lawn.

With the grass cutter 1 according to this embodiment, at the time of collecting the grass in the grass collection vessel 20, since the blower 30 is not driven until the grass collection vessel 20 is not detected, it is possible to prevent the grass collection work being performed in the state in which the operator forgets loading the grass collection vessel 20 in the vehicle body 2. Further, if the on/off manipulation unit 93 is off, the control unit 90 determines to restrict the on manipulation of the mower drive operating unit 91 or drive the blower 30. In the case where the on/off manipulation unit 93 is off, the control unit notifies the operator of it. In the case of driving the blower 30, the control unit automatically drives the blower 30. Therefore, even though the operator forgets turning on the on/off manipulation unit 93, it is possible to perform the grass collection work. Accordingly, it is possible to prevent the operator from forgetting turning on the blower 30 at the grass collection work.

As described above, with the grass cutter 1 according to the embodiment, when the blower PTO hydraulic clutch 62 is in neutral, the brake rotor 53 which is the brake member is sandwiched between the low-speed-side piston 68 and the high-speed-side piston 69, it is possible to reduce the braking force to be applied to the blower PTO transmission shaft 61. Therefore, there is an effect in that since the rotation of the blower PTO transmission shaft 61 caused by its inertia can be stopped, it is possible to stop the blower 30 when the blower PTO hydraulic clutch 62 is in neutral. If a problem occurs in that the interior of the pipe or the blower 30 is clogged with the grass, it is possible to stop the blower 30 at relatively short times by turning off the blower PTO hydraulic clutch 62. Therefore, it is possible to shorten the time until maintenance starts, such as opening the blower fan case.

Further, with the grass cutter 1 according to the embodiment, even in the case where the PTO shaft of other operating machine is connected with the blower PTO transmission shaft 61, when the blower PTO hydraulic clutch 62 is in neutral, the brake rotor 53 which is the brake member is sandwiched between the low-speed-side piston 68 and the high-speed-side piston 69, it is possible to reduce the braking force to be applied to the PTO shaft via the blower PTO transmission shaft 61. Therefore, there is an effect in that since the rotation of the PTO shaft caused by its inertia can be stopped, it is possible to stop the PTO shaft when the blower PTO hydraulic clutch 62 is in neutral. That is, since the blower PTO hydraulic clutch 62 is turned off at timing at which the operator (worker) wants to stop the PTO shaft, the PTO shaft can be stopped, thereby stopping the PTO shaft at the timing intended by the operator.

In addition, with the grass cutter 1 according to the embodiment, since the low-speed-side intermediate gear 82 of the intermediate shaft 80 is interlocked with the low-speed gear 63, the high-speed-side intermediate gear 83 of the intermediate shaft 80 is interlocked with the high-speed gear 64, and the drive force transmitting gear 81 of the intermediate shaft 80 is interlocked with the mower drive force transmitting gear 73, the drive force generated from the drive source 40 can be respectively transmitted to the blower PTO transmission shaft 61 and the mower PTO transmission shaft 71 via the intermediate shaft 80 which is disposed between the blower PTO transmission shaft 61 and the mower PTO transmission shaft 71. Therefore, the shift transmission mechanism 50 transmitting the drive force generated from the drive source 40 to the mower deck 10 and the blower 30 can be constituted of three shafts 61, 71 and 80, thereby simplifying the shift transmission mechanism 50.

Furthermore, with the grass cutter 1 according to the embodiment, since the blower PTO hydraulic clutch 62 and the mower PTO hydraulic clutch 72 are housed by the common clutch case 51, the blower PTO hydraulic clutch 62 and the mower PTO hydraulic clutch 72 can be handled in a single body. Therefore, the shift transmission mechanism 50 can be configured in compact. Also, since the blower PTO hydraulic clutch 62 and the mower PTO hydraulic clutch 72 are housed by the common clutch case 51, it is possible to prevent invasion of the grass or the dust.

In this embodiment, the vehicle body 2 is an all-wheel-drive type capable of driving the left and right front wheels 3 and the left and right rear wheels 4, but it may be a rear-wheel-drive type or a front-wheel-drive type. Therefore, it is possible to drive the grass cutter 1 in a traveling mode suitable for a location where the grass collection work is performed.

Further, instead of the drive motor 103, the front wheels 3 or the rear wheels 4 may be driven by the drive force generated from the drive source 40 via a hydraulic static transmission (HST), or may be driven by a transmission motor. Therefore, the grass cutter 1 can be driven by various drive sources.

## Claims

1. A grass cutter comprising:
a mower deck (10) configured to house a rotating blade for mowing grass therein;
a blower (30) configured to convey the grass mowed by the rotating blade to a grass collection vessel;
a blower PTO transmission shaft (61) connected with the blower (30);
a drive force low-speed transmitting passage (L) through which a drive force from a drive source (40) is transmitted at low speed to a blower PTO hydraulic clutch (62);
a drive force high-speed transmitting passage (H) through which the drive force from the drive source (40) is transmitted at high speed to the blower PTO hydraulic clutch (62); wherein the blower PTO hydraulic clutch (62) is configured to connect the blower PTO transmission shaft (61) with the drive force low-speed transmitting passage (L), connect the blower PTO transmission shaft (61) with the drive force high-speed transmitting passage (H), and shift the blower PTO transmission shaft (61) in a neutral state in which the blower PTO transmission shaft (61) is not connected with the drive force low-speed transmitting passage (L) and the drive force high-speed transmitting passage (H);
a mower PTO transmission shaft (71) configured to transmit the drive force to the rotating blade in the mower deck (10);
a mower PTO hydraulic clutch (72) configured to switch transmission and interruption of the drive force to mower PTO transmission shaft (71);
a drive force transmitting gear (81) configured to transmit the drive force from the drive source (40) to the mower PTO hydraulic clutch (72); and
an intermediate shaft (80) which is disposed between the mower PTO transmission shaft (71) and the blower PTO transmission shaft (61), and in which the drive force transmitting gear (81) is installed;
wherein the mower PTO transmission shaft (71) transmits the drive force from the drive source (40), the drive force being transmitted via the drive force transmitting gear (81); and
the blower PTO transmission shaft (61) transmits the drive force from the intermediate shaft (80);
**characterized in that**
the blower PTO hydraulic clutch (62) and the mower PTO hydraulic clutch (72) are housed in a common clutch case (51),
wherein the intermediate shaft (80) includes a low-speed-side intermediate gear (82) of the drive force low-speed transmitting passage (L) and a high-speed-side intermediate gear (83) of the drive force high-speed transmitting passage (H).

## Patentansprüche

1. Grasschneider, umfassend:
ein Mähdeck (10), das dazu ausgebildet ist, eine rotierende Klinge zum Mähen von Gras in demselben unterzubringen;
ein Gebläse (30), das dazu ausgebildet ist, das von der rotierenden Klinge gemähte Gras zu einem Grasauffangbehälter zu befördern;
eine Gebläse-PTO-Übertragungswelle (61), die mit dem Gebläse (30) verbunden ist;
einen Antriebskraft-Niederdrehzahl-Übertragungsweg (L), über den eine Antriebskraft von einer Antriebsquelle (40) bei niedriger Drehzahl zu einer Gebläse-PTO-Hydraulikkupplung (62) übertragen wird;
einen Antriebskraft-Hochdrehzahl-Übertragungsweg (H), über den die Antriebskraft von der Antriebsquelle (40) bei hoher Drehzahl zur Gebläse-PTO-Hydraulikkupplung (62) übertragen wird;
wobei die Gebläse-PTO-Hydraulikkupplung (62) dazu ausgebildet ist, die Gebläse-PTO-Übertragungswelle (61) mit dem Antriebskraft-Niederdrehzahl-Übertragungsweg (L) zu verbinden, die Gebläse-PTO-Übertragungswelle (61) mit dem Antriebskraft-Hochdrehzahl-Übertragungsweg (H) zu verbinden, und die Gebläse-PTO-Übertragungswelle (61) in einen neutralen Zustand zu verlagern, in dem die Gebläse-PTO-Übertragungswelle (61) nicht mit dem Antriebskraft-Niederdrehzahl-Übertragungsweg (L) und dem Antriebskraft-Hochdrehzahl-Übertragungsweg (H) verbunden ist;
eine Mäher-PTO-Übertragungswelle (71), die dazu ausgebildet ist, die Antriebskraft zur rotierenden Klinge im Mähdeck (10) zu übertragen;
eine Mäher-PTO-Hydraulikkupplung (72), die dazu ausgebildet ist, Übertragung und Unterbrechung der Antriebskraft zur Mäher-PTO-Übertragungswelle (71) zu schalten;
ein Antriebskraft-Übertragungsgetriebe (81), das dazu ausgebildet ist, die Antriebskraft von der Antriebsquelle (40) zur Mäher-PTO-Hydraulikkupplung (72) zu übertragen; und
eine Zwischenwelle (80), die zwischen der Mäher-PTO-Übertragungswelle (71) und der Gebläse-PTO-Übertragungswelle (61) angeordnet ist, und in der das Antriebskraft-Übertragungsgetriebe (81) installiert ist;
wobei die Mäher-PTO-Übertragungswelle (71) die Antriebskraft von der Antriebsquelle (40) überträgt, wobei die Antriebskraft über das Antriebskraft-Übertragungsgetriebe (81) übertragen wird; und
die Gebläse-PTO-Übertragungswelle (61) die Antriebskraft von der Zwischenwelle (80) überträgt;
**dadurch gekennzeichnet, dass**
die Gebläse-PTO-Hydraulikkupplung (62) und die Mäher-PTO-Hydraulikkupplung (72) in einem gemeinsamen Kupplungsgehäuse (51) untergebracht sind,
wobei die Zwischenwelle (80) ein niederdrehzahlseitiges Zwischengetriebe (82) des Antriebskraft-Niederdrehzahl-Übertragungswegs (L), und ein hochdrehzahlseitig Zwischengetriebe (83) des Antriebskraft-Hochdrehzahl-Übertragungswegs (H) einschließt.

## Revendications

1. Tondeuse à gazon comprenant :
un carter de tondeuse (10) configuré pour loger une lame rotative pour tondre le gazon à l'intérieur de celui-ci ;
une souffleuse (30) configurée pour transporter le gazon tondu par la lame rotative dans un récipient de collecte de gazon ;
un arbre de transmission de prise de force de souffleuse (61) raccordé à la souffleuse (30) ;
un passage de transmission à bas régime de force motrice (L) à travers lequel une force motrice d'une source de force motrice (40) est transmise à bas régime à un embrayage hydraulique de prise de force de souffleuse (62) ;
un passage de transmission à haut régime de force motrice (H) à travers lequel la force motrice de la source de force motrice (40) est transmise à haut régime à l'embrayage hydraulique de prise de force de souffleuse (62) ;
dans laquelle l'embrayage hydraulique de prise de force de souffleuse (62) est configuré pour raccorder l'arbre de transmission de prise de force de souffleuse (61) au passage de transmission à bas régime de force motrice (L), raccorder l'arbre de transmission de prise de force de souffleuse (61) au passage de transmission à haut régime de force motrice (H), et mettre l'arbre de transmission de prise de force de souffleuse (61) à un point mort auquel l'arbre de transmission de prise de force de souffleuse (61) n'est pas raccordé au passage de transmission à bas régime de force motrice (L) et au passage de transmission à haut régime de force motrice (H) ;
un arbre de transmission de prise de force de tondeuse (71) configuré pour transmettre la force motrice à la lame rotative dans le carter de tondeuse (10) ;
un embrayage hydraulique de prise de force de tondeuse (72) configuré pour commuter une transmission et une interruption de la force motrice à l'arbre de transmission de prise de force de tondeuse (71) ;
un engrenage de transmission de force motrice (81) configuré pour transmettre la force motrice de la source de force motrice (40) à l'embrayage hydraulique de prise de force de tondeuse (72) ; et
un arbre intermédiaire (80) qui est disposé entre l'arbre de transmission de prise de force de tondeuse (71) et l'arbre de transmission de prise de force de souffleuse (61), et dans lequel l'engrenage de transmission de force motrice (81) est installé ;
dans laquelle l'arbre de transmission de prise de force de tondeuse (71) transmet la force motrice de la source de force motrice (40), la force motrice étant transmise par l'intermédiaire de l'engrenage de transmission de force motrice (81) ; et
l'arbre de transmission de prise de force de souffleuse (61) transmet la force motrice de l'arbre intermédiaire (80) ;
**caractérisée en ce que**
l'embrayage hydraulique de prise de force de souffleuse (62) et l'embrayage hydraulique de prise de force de tondeuse (72) sont logés dans un carter d'embrayage commun (51),
dans laquelle l'arbre intermédiaire (80) comprend un engrenage intermédiaire de côté à bas régime (82) du passage de transmission à bas régime de force motrice (L) et un engrenage intermédiaire de côté à haut régime (83) du passage de transmission à haut régime de force motrice (H).
